# EUROPÄISCHE PATENTSCHRIFT

(11) **EP 2 746 615 B1**
(45) Veröffentlichungstag und Bekanntmachung des Hinweises auf die Patenterteilung: **21.02.2024**
(21) Anmeldenummer: 13192250.2
(22) Anmeldetag: 09.11.2013
(51) Int. Cl.: F16F 9/46, F16F 9/348

(54) **Dämpfungsventilanordnung für einen semiaktiven Schwingungsdämpfer**
Damping valve assembly for a semi-active vibration damper
Ensemble de soupapes d'amortissement pour un amortisseur d'oscillations semi-actif

(30) Priorität: 20.12.2012 DE 102012112729
(43) Veröffentlichungstag der Anmeldung: 25.06.2014
(73) Patentinhaber: KTM Components GmbH, 5222 Munderfing (AT)
(72) Erfinder: Wimmer, Johannes, 84556 Kastl (DE)
(74) Vertreter: Söllner, Udo

(56) Entgegenhaltungen:
- EP-A2- 2 505 869
- WO-A1-2012/105556
- DE-A1-102012 209 065
- GB-A- 2 039 000
- US-A- 5 860 631
- US-A1- 2011 203 888
- US-A1- 2012 305 349

## Beschreibung

Die vorliegende Erfindung betrifft eine Dämpfungsventilanordnung zur Steuerung eines eine Steuerkammer einer Dämpfungseinrichtung eines Schwingungsdämpfers durch ein Steuerfluid beaufschlagenden Vorsteuerdrucks, mit einem mittels einer elektrisch beaufschlagbaren Spule verlagerbaren und in einem Gehäuse vorgesehenen Anker, der einen Führungsstift aufweist, an dem eine den Führungsstift abstützende erste Federscheibe vorgesehen ist, nach dem Oberbegriff des Anspruchs 1.

Die Erfindung betrifft darüber hinaus ein Verfahren der Steuerung eines Vorsteuerdrucks in einer Steuerkammer einer Dämpfungseinrichtung eines Schwingungsdämpfers mittels eines magnetisch betätigten Ankers einer Ventilanordnung, der die Fläche einer von einem Steuerfluid durchströmbaren Durchströmungsöffnung der Ventilanordnung verändert, nach dem Oberbegriff des Anspruchs 13.

Über die Steuerung oder Veränderung des sich in die Steuerkammer fortpflanzenden Drucks des Steuerfluids kann der in der Steuerkammer herrschende Steuerdruck beeinflusst werden, wobei der Steuerdruck einen Ventilkörper oder ein Arbeitsventil in der Form beispielsweise von Federscheiben oder Shims beaufschlagen kann, die wiederum einen, einen Fluidmassenstrom frei gebenden oder beschränkenden Durchlass beeinflussen, mittels dem eine einer Schwingungsbewegung entgegengesetzt gerichtete Dämpfungskraft erzeugt werden kann.

Ist der Steuerdruck in der Steuerkammer hoch, können die Federscheiben den Durchlass nur geringfügig öffnen und es stellt sich eine hohe Dämpfungskraft ein, wird der Steuerdruck in der Steuerkammer mittels der Dämpfungsventilanordnung abgesenkt, übt er niedrigere, der Öffnungsbewegung der Federscheiben entgegenstehende Druckkräfte aus, der Durchlass wird weiter geöffnet und die Dämpfungskräfte werden verringert. Mittels einer gattungsgemäßen Dämpfungsventilanordnung kann das Betriebsverhalten eines Dämpfers, beispielsweise eines Radaufhängungsbauteils eines Fahrzeugs, in weitgehend Echtzeit beeinflusst werden.

Anhand der WO 2009/157841 A1 ist ein Druckregler für ein Ventil eines Stoßdämpfers bekannt geworden, bei dem mittels eines Solenoids ein Kolben betätigt wird, der in zwei Buchsen axial verschieblich gelagert ist. Der Kolben liegt dabei auf einer Federscheibe auf, die eine Axialkraft aufbauen kann, aber keine radialen Führungskräfte bereitstellen kann, die radiale Führung wird von den beiden Buchsen bereitgestellt. Wenn der Kolben bewegt werden soll, müssen daher zunächst die in den beiden Buchsen vorherrschenden Haftkräfte, die zu Losbrechkräften führen, überwunden werden, so dass sich bei einer axial oszillierenden Bewegung des Kolbens eine ungewünschte Hysterese einstellt, die einer genauen Steuerung der Verlagerungsbewegung des Kolbens entgegenwirkt und die Losbrechkräfte darüber hinaus die Trägheit des Systems in unerwünschter Weise erhöhen, was einer schnellen Regelbewegung entgegen steht.

Anhand der DE 199 14 504 C5 ist ein hydraulischer Schwingungsdämpfer mit einstellbarer Dämpfungskraft bekannt geworden, der ein Druckregelventil mit einem Kolben besitzt, der über eine Magnetspule verschoben werden kann. Der Kolben wird dabei in einer zylindrischen Hülse geführt, so dass es bei der Bewegung des Kolbens wieder zum Zustand erhöhter Reibung in der Hülse kommt, was wieder zum Problem der Hysterese führt und die Regelgeschwindigkeit des Systems negativ beeinflusst.

Anhand der DE 10 2009 015 584 A1 ist ein Stoßdämpfer mit einstellbarer Dämpfungskraft bekannt geworden, bei dem die Trägheit des Kolbens des Drucksteuerventils (Solenoidventil) verringert werden soll. Der Stempel ist dabei in einer Bohrung wandgeführt angeordnet. Durch die Wandanlagerung des Stempels kommt es zu reibungsbedingten Anhaftungseffekten und die Trägheit des Systems kann daher nicht wirksam verringert werden.

Anhand der DE 10 2010 046 833 A1 ist ein Stoßdämpfer mit Dämpfungskraftsteuerung bekannt geworden. Der Stoßdämpfer besitzt ein Solenoid, welches einen Kolben betätigt, der in einer Bohrung geführt wird. Aufgrund unvermeidbarer Exzentrizitäten der Bohrung kommt es zu Anhaftungseffekten des Kolbens in der Bohrung und damit wiederum zu den bereits geschilderten Hystereseproblemen. Die Exzentrizität der Bohrung führt darüber hinaus dazu, dass der um den Kolben herum bestehende Spaltraum zwischen Kolbenaußenwand und Innenwand der Bohrung entlang des Umfangs des Kolbens unterschiedliche Werte annimmt, was wiederum dazu führt, dass bei kleinen Spalträumen der Kolben aufgrund der vom Solenoid erzeugten Magnetkraft gegen die Bohrung gedrückt wird, was wiederum die Problematik der Losbrechmomente erhöht und damit auch das Hystereseproblem verstärkt.

Anhand der DE 2 245 255 A1 ist eine Führungsmembran mit Stegen bekannt geworden, die in einer Ventilanordnung mit einer Erregerspule Anwendung findet. Die Führungsmembran dient dabei der Führung eines Ankers in radialer und axialer Richtung, eine weitere Funktion übt diese Führungsmembran nicht aus.

Anhand der DE 40 16 807 C2 ist ein regelbarer Schwingungsdämpfer bekannt geworden, der einen elektrisch betätigten Magneten aufweist, der eine Steuernadel betätigt, welche eine Durchströmungsfläche stufenlos verschließen und wieder freigeben kann. Relativ zur Steuernadel ist ein Ventilkörper in einem Ventilgehäuse axial verlagerbar aufgenommen und zwar derart, dass der Ventilkörper in einer Bohrung des Ventilgehäuses sitzt. Bei dieser Anordnung soll die Steuernadel dem Ventilkörper hinsichtlich ihrer Axialbewegung vorauslaufen, so dass einer, eine Vorsteueraufgabe erfüllenden Fluidströmung, die Hauptstufenfluidströmung folgt.

Schließlich ist anhand der DE 10 2011 075 909 A1 eine verstellbare Dämpfungsventileinrichtung bekannt geworden, bei der eine als Scheibe ausgebildete Stellfeder einen Achskörper in einem Ventilgehäuse führt. Die Stellfeder dient dabei als ein Vorspannglied, welches auf den Achskörper wirkt. Der Achskörper ist in einem Ventilkörper gelagert, der in einer Führungsbohrung des Ventilgehäuses aufgenommen ist. Aufgrund unvermeidbarer Exzentrizitäten der Führungsbohrung kommt es auch hier wieder zu Wandanhaftungseffekten des Ventilkörpers relativ zum Ventilgehäuse und damit zu den vorstehend geschilderten Hystereseproblemen.

Anhand der US 2012 0305349 A1 schließlich ist ein Stoßdämpfer mit einem Pilotventil bekannt geworden, welches einen Führungsstift aufweist, der einen Anker durchsetzt und an dem eine sternförmig ausgebildete Federscheibe angeordnet ist, welche ein Pilotventilglied zur Anlage an einem Sitzabschnitt beaufschlagen kann. Eine Federscheibe gemäß dem Oberbegriff des Anspruchs 1 ist hier ebenso vorgesehen wie in der US 2011 203 888 A1.

Diese Dokumente und die US 5 860 631 A beschreiben, dass der Anker bzw. ein Führungsstift für den Anker in Gleitlagern oder Bohrungen geführt werden.

Ausgehend hiervon liegt der vorliegenden Erfindung nunmehr zur Beseitigung der geschilderten Nachteile die Aufgabe zu Grunde, eine Dämpfungsventilanordnung zu schaffen, welche eine genaue und rasche Steuerung des die Steuerkammer beaufschlagenden Steuerdrucks zulässt und auch bei einem etwaigen Ausfall der elektrischen Stromversorgung eine vorbestimmte Dämpfungswirkung eines Schwingungsdämpfers ermöglicht. Auch soll ein Verfahren zur Steuerung eines Vorsteuerdrucks in einer Steuerkammer einer Dämpfungseinrichtung eines Schwingungsdämpfers geschaffen werden.

Die Erfindung weist zur Lösung dieser Aufgabe hinsichtlich der Dämpfungsventilanordnung die im Anspruch 1 angegebenen Merkmale auf, vorteilhafte Ausgestaltungen hiervon sind in den weiteren Ansprüchen beschrieben. Darüber hinaus weist die Erfindung zur Lösung der Aufgabe hinsichtlich des Verfahrens die im Anspruch 14 angegebenen Merkmale auf.

Die Erfindung schafft eine Dämpfungsventilanordnung zur Steuerung eines eine Steuerkammer einer Dämpfungseinrichtung eines Schwingungsdämpfers durch ein Steuerfluid beaufschlagenden Vorsteuerdrucks, mit einem mittels einer elektrisch beauschlagbaren Spule verlagerbaren und in einem Gehäuse vorgesehenen Anker, der einen Führungsstift aufweist, an dem eine den Führungsstift abstützende erste Federscheibe vorgesehen ist, wobei die erste Federscheibe einen radial innenliegenden Bereich aufweist, der frei von Ausnehmungen ist und der Bereich zur Veränderung der Durchströmungsöffnung der Dämpfungsventilanordnung zwischen dem innenliegenden Bereich und einem mit einem umlaufenden Bund versehenen Ringkörper oder Hülsenkörper relativ zum Bund verlagerbar ist.

Mittels der erfindungsgemäßen Dämpfungsventilanordnung kann der Vorsteuerdruck eines Steuerfluids beeinflusst werden, bei dem es beispielsweise um ein Hydrauliköl, ein in einem Teleskopfedergabelbein vorgesehenes Gabelöl, ein in einem Stoßdämpfer vorgesehenes Öl oder ein anderes zu Dämpfungszwecken im Schwingungsdämpfer strömendes Fluid handeln kann. Wird der Anker von der elektrisch beaufschlagbaren Spule so mit Magnetkraft beaufschlagt, dass die Federscheibe die vom Steuerfluid durchströmbare Durchströmungsöffnung kleiner werden lässt, so stellt sich bei einer Schwingungsbewegung eines Radaufhängungsbauteils, welches mit dem Schwingungsdämpfer versehen ist und die zu einer Verschiebung von Steuerfluid führt, ein höherer Druck im Steuerfluid ein, der Vorsteuerdruck in der Steuerkammer steigt, der Öffnungsbewegung der Federscheiben oder Shims eines vom Vorsteuerdruck beaufschlagten Arbeitsventil wird eine größere Schließkraft durch den Vorsteuerdruck entgegengesetzt, die Dämpfung im System nimmt zu.

Die in der erfindungsgemäßen Dämpfungsventilanordnung vorgesehene erste Federscheibe sorgt also nicht nur für die axiale und radiale Führung des Führungsstifts, sondern auch dafür, dass sie die dem Steuerfluid zur Durchströmung bereitgestellte Durchströmungsöffnung verändern kann, es wird also eine Funktionsintegration herbeigeführt, die üblicherweise vom Führungsstift übernommene Funktion des Öffnens oder Schließens der Ventilbohrung wird von der Federscheibe übernommen. Dies führt auch dazu, dass die Ventilanordnung hinsichtlich ihrer Massenträgheit vorteilhaft ausgeführt werden kann, da eine große Ventilbohrung nicht mehr von einem zum Steuern der großen Ventilbohrung mit großen Abmessungen versehenen Führungsstift gesteuert wird, der dementsprechend große Massenträgheit im System verursacht. Die erfindungsgemäße Dämpfungsventilanordnung kann zur sehr schnellen Veränderung der Durchströmungsöffnung sehr schnell angesteuert werden, die Reaktionszeit des Systems ist dementsprechend niedrig.

Darüber hinaus muss durch die axiale und radiale Führung des Führungsstifts und damit des Ankers mit der Federscheibe durch die von der Spule erzeugte Magnetkraft kein Losbrechmoment des Ankers in einer Führungsbohrung oder in Hülsen oder Buchsen, die zur Lagerung des Ankers verwendet werden, überwunden werden, das durch die bekannte Lagerung hervorgerufene Hystereseproblem entsteht bei der erfindungsgemäßen Dämpfungsventilanordnung nicht mehr.

Dabei ist vorgesehen, dass der Führungsstift den Anker durchsetzt und an dem der Durchströmungsöffnung gegenüberliegenden Endbereich eine zweite Federscheibe aufweist, die den Führungsstift radial nach außen abstützt. Dadurch wird der Führungsstift und damit auch der Anker von zwei Federscheiben abgestützt, so dass der in einer Bohrung oder Öffnung des Gehäuses vorgesehene Anker nicht an der Bohrungswand anliegt, wodurch Wandanhaftungseffekte vermieden werden und auch das Problem der Hysterese wirksam beseitigt oder wesentlich minimiert worden ist.

Die Federscheiben können darüber hinaus hinsichtlich ihrer radialen und axialen Steifigkeit in weiten Bereichen beeinflusst werden. Die erfindungsgemäße Dämpfungsventilanordnung zeichnet sich dadurch aus, dass die Federscheiben zwar in radialer Richtung eine hohe Steifigkeit aufweisen, in axialer Richtung aber eine niedrige Steifigkeit, so dass die zur Verlagerungsbewegung des Ankers benötigte Magnetkraft klein gehalten werden kann, wodurch wiederum der Strombedarf der Spule verringert werden kann und die Dämpfungsventilanordnung insgesamt sehr kompakt aufgebaut ist, da auch die Abmessungen der Spule verglichen mit bekannten Anordnungen verringert werden können. Auf diese Weise eignet sich die erfindungsgemä-ße Dämpfungsventilanordnung auch zur Anordnung in einem Teleskopfedergabelbein eines Motorrads oder Fahrrads. Ein solches Teleskopfedergabelbein weist üblicherweise einen kleinen Durchmesser auf, der die Integration von bekannten Dämpfungsventilanordnungen erschwert oder unmöglich macht.

Es ist nach einer Weiterbildung der Erfindung vorgesehen, dass die Federscheiben den Anker im Gehäuse radial und axial führen und im Abstand zur Innenumfangswand des Gehäuses halten, also beabstandet zur Aufnahmebohrung für den Anker im Gehäuse. Der Abstand kann aufgrund der exakten radialen und axialen Führung des Ankers durch die Federscheiben verringert werden, wodurch die Magnetkräfte erhöht werden, was wiederum dazu beiträgt, dass die erfindungsgemäße Dämpfungsventilanordnung insbesondere in Durchmesserrichtung sehr kompakt und klein aufgebaut ist.

Nach einer Weiterbildung der Erfindung ist es auch vorgesehen, dass der Anker im Gehäuse derart angeordnet ist, dass er von Fluid umgebbar ist. Es bedeutet dies mit anderen Worten, dass der Anker allseits von dem Fluid, welches von der erfindungsgemäßen Dämpfungsventilanordnung gesteuert wird, umgeben ist, welches auch das Arbeitsfluid in dem Radaufhängungsbauteil sein kann, also dem Teleskopfedergabelbein oder dem Stoßdämpfer.

Auf diese Weise wird erreicht, dass der von der Dämpfungsventilanordnung eingenommene Bauraum weiter verringert werden kann, da der zur Aufnahme von Dichtungseinrichtungen, die den Innenraum des Ankergehäuses frei von Fluid halten würden, benötigte Bauraum entfallen kann. Der Anker ist dabei so konfiguriert, dass sich die vom Fluid beaufschlagten resultierenden Fluidkräfte in axialer und radialer Richtung aufheben, der Anker also insbesondere nicht durch Fluidkräfte in Richtung zur Wandung der Bohrung hin verlagert wird.

Es ist nach einer Weiterbildung der Erfindung auch vorgesehen, dass die Federscheiben jeweils eine mittige Ausnehmung zur Aufnahme des Führungsstifts aufweisen und mit Ausnehmungen versehen sind, die sich von einem radial innen liegenden Bereich der Federscheiben zu einem radial außen liegenden Bereich der Federscheiben erstrecken und am radial außen liegenden Bereich entlang eines Teilumfangs der Federscheiben im Abstand zum Außenumfang verlaufen. Mit den Ausnehmungen wird erreicht, dass die axiale Steifigkeit relativ zur radialen Steifigkeit der Federscheiben den jeweiligen Anforderungen entsprechend eingestellt werden kann. Im vorliegenden Fall wird dadurch eine radiale Steifigkeit erreicht, die etwa dem 10 bis 20 fachen der axialen Steifigkeit entspricht. Darüber hinaus wird durch die Ausnehmungen auch erreicht, dass der Anker allseits von Fluid umgeben ist, und sich die auf den Anker auswirkenden Fluidkräfte gegenseitig aufheben.

Die Federscheiben können dabei in vorteilhafter Weise drei Ausnehmungen aufweisen, was zur Ausbildung von drei Verbindungsstegen zwischen einem umlaufenden inneren Bereich und umlaufenden äußeren Bereich der jeweiligen Federscheiben führt, die jeweils breit ausgebildet sind und somit eine hohe radiale Steifigkeit erreicht wird.

Diese Ausbildung der Federscheiben führt auch dazu, dass sie sich durch einen einfachen Fertigungsvorgang, beispielsweise durch Stanzen ausbilden lassen und somit die Herstellkosten verringert werden. Es hat sich als vorteilhaft gezeigt, wenn das Verhältnis der Gesamtfläche der Ausnehmung der Federscheibe zur Gesamtfläche der Federscheibe ohne die Ausnehmungen etwa 1 zu 1,5 bis etwa 1 zu 3 beträgt.

Es ist gemäß der Erfindung auch vorgesehen, dass die erste Federscheibe einen radial innenliegenden Bereich aufweist, der frei von Ausnehmungen ist und der Bereich zur Veränderung der Durchströmungsöffnung der Ventilanordnung zwischen dem innenliegenden Bereich und einem mit einem umlaufenden Bund versehenen Ringkörper oder Hülsenkörper relativ zum Bund verlagerbar ist. Der umlaufende Bund bildet eine Dichtkante aus. Je näher sich der innenliegende Bereich dem Bund nähert, je geringer also der Abstand zwischen dem innenliegenden Bereich und dem Bund ist, desto kleiner wird die dem Steuerfluidstrom zur Durchströmung zur Verfügung stehende Fläche und desto größer wird der sich in Richtung zur Steuerkammer fortsetzende Steuerdruck.

Bewegt sich im Umkehrschluss der innenliegende Bereich vom Umlaufbund des Ringkörpers axial in Längsrichtung der Ventilanordnung weg, wird die zur Durchströmung zur Verfügung stehende Fläche größer, der die Steuerkammer beaufschlagende Steuerdruck nimmt ab, die Dämpfung wird geringer.

Es ist nach einer Weiterbildung der Erfindung auch vorgesehen, dass die Dämpfungsventilanordnung ein axial zwischen der ersten Federscheibe und dem Anker angeordnetes rohrstückförmiges Ankergegenstück aufweist, welches einen sich in Richtung zur ersten Federscheibe hin erstreckenden umlaufenden Bund aufweist, an dem ein radial innen liegender Bereich der ersten Federscheibe in Anlage bringbar ist.

In Axialrichtung der Dämpfungsventilanordnung betrachtet liegt der umlaufende Bund des Ankergegenstücks dem umlaufenden Bund des Ringskörpers gegenüber. Die erste Federscheibe kann mittels der Spule entlang des Wegs zwischen den beiden Bunden bewegt werden. Liegt die erste Federscheibe an dem umlaufenden Bund des Ringkörpers an, baut sich in der Steuerkammer ein hoher Vorsteuerdruck auf.

Würde die Federscheibe an dem umlaufenden Bund des rohrstückförmigen Ankergegenstücks anliegen, wäre durch die Federbewegung des Radaufhängungsbauteils eine Fluidströmung an Steuerfluid zwar möglich, aber nur bis zu einer abgeschlossenen Ringkammer oberhalb der ersten Federscheibe, das Steuerfluid würde in der Ringkammer eingeschlossen werden.

Um eine vorbestimmte Dämpfungswirkung auch dann zu erreichen, wenn die erfindungsgemäße Dämpfungsventilanordnung, beziehungsweise die Spule nicht bestromt wird, ist die Dämpfungsventilanordnung mit einer so genannten Fail-Safe-Funktion ausgestattet.

Die Dämpfungsventilanordnung weist hierzu einen von einer Federringscheibe verschließbaren Bypassdurchlass auf, der bei einem vorbestimmten Öffnungsdruck einen Steuerfluidstrom zwischen einem in Richtung zur ersten Federscheibe verlaufenden Fluidzuströmdurchlass und aus der Ringkammer wieder heraus frei gibt. Das durch den Fluidzuströmdurchlass in Richtung zur ersten Federscheibe hin strömende Fluid kann auf diese Weise die Federringscheibe beaufschlagen und den Bypassdurchlass öffnen, so dass der Fluidstrom in Richtung aus der Ringkammer heraus möglich ist, es baut sich nicht ein unkontrolliert hoher Vorsteuerdruck in der Steuerkammer auf, es findet also auch bei einem etwaigen Ausfall der Stromversorgung zum Anker eine vorbestimmte Dämpfung statt.

Es ist nach einer Weiterbildung der Erfindung auch vorgesehen, dass der Führungsstift mittels einer beispielsweise manuell betätigbaren Federeinrichtung gegen die Wirkung der Federscheiben vorspannbar ist derart, dass die Durchströmungsöffnung vorbestimmt geöffnet ist, wodurch einerseits der Anker sicher in die Fail-Safe-Postion vorspannbar ist und andererseits Serientoleranzen ausgeglichen werden können. Damit können Toleranzen der Vorspannungen der Federscheiben ausgeglichen werden.

Es ist nach einer vorteilhaften Ausführungsform der erfindungsgemäßen Dämpfungsventilanordnung vorgesehen, dass die Dämpfungsventilanordnung zur Bereitstellung eines auf ein Arbeitsventil in einer Steuerkammer einer Dämpfungseinrichtung eines Schwingungsdämpfers wirkenden Steuerdrucks im Bereich von etwa 1 bar bis etwa 20 bar ausgebildet ist. Dieser Wertebereich kann durch eine Veränderung des die Spule beaufschlagenden Steuerstroms im Bereich von etwa 500 mA bis etwa 1800 mA erreicht werden, Stromwerten also, die durch entsprechend kleine Leitungsquerschnitte der Ansteuerschaltung der Spule erreicht werden können, so dass eine Miniaturisierung der Dämpfungsventilanordnung möglich ist und diese in den hinsichtlich des zur Verfügung stehenden Raumes beschränkten Aufnahmeraum eines Schwingungsdämpfers eines Teleskopfedergabelbeins integriert werden kann.

Die Erfindung schafft auch ein Verfahren der Steuerung eines Vorsteuerdrucks in einer Steuerkammer einer Dämpfungseinrichtung eines Schwingungsdämpfers mittels eines magnetisch betätigten Ankers einer Ventilanordnung, der die Fläche einer von einem Steuerfluid durchströmbaren Durchströmungsöffnung der Ventilanordnung verändert, wobei mittels des Ankers eine mit dem Anker gekoppelte Federscheibe relativ zu einem umlaufenden Bund verlagert wird und damit die Fläche der Durchströmungsöffnung zwischen Federscheibe und Bund verändert wird und die Federscheibe den Anker relativ zu einem den Anker aufnehmenden Gehäuse radial und axial führt.

Mit dem erfindungsgemäßen Verfahren wird also eine Funktionsintegration erreicht, dergestalt, dass mittels der Federscheibe sowohl die Fläche der Durchströmungsöffnung, die für den Steuerfluidstrom zur Verfügung steht, verändert wird, als auch gleichzeitig der mit der Federscheibe gekoppelte Anker in seinem Aufnahmegehäuse radial und axial geführt wird.

Da die Federscheibe in axialer Richtung eine geringe Federsteifigkeit aufweist, und durch die Führung des Ankers mittels der Federscheibe typische Losbrechmomente aufgrund von körperlichem Kontakt des Ankers mit einer den Anker aufnehmenden Bohrung vermieden werden können, kann der Anker durch die auf ihn wirkende Magnetkraft mit hoher Beschleunigung bewegt werden, was in Folge dazu führt, dass mit dem erfindungsgemäßen Verfahren der Vorsteuerdruck in der Steuerkammer sehr schnell verändert werden kann und eine so implementierte Vorsteuerdruckregelung sehr schnell arbeitet. Dadurch, dass der Anker zwischen den beiden mit Vorspannung versehenen Federscheiben angeordnet ist, befindet er sich immer in einer definierten spielfreien Position, so dass keine weiteren Befestigungselemente für die Anordnung des Ankers notwendig sind und auch eine einfache Montage der Dämpfungsventilanordnung erreicht wird.

Die Erfindung wird im Folgenden anhand der Zeichnung näher erläutert. Diese zeigt in:
- Fig. 1: eine teilweise geschnittene Darstellung einer Dämpfungsventilanordnung nach einer Ausführungsform gemäß der vorliegenden Erfindung;
- Fig. 1A: eine Draufsichtansicht auf eine erste Federscheibe der Dämpfungsventilanordnung nach Fig. 1;
- Fig. 1B: eine Draufsichtansicht auf eine zweite Federscheibe der Dämpfungsventilanordnung nach Fig. 1;
- Fig. 2: eine Darstellung ähnlich derjenigen nach Fig. 1, bei der der Anker mit niedrigen Stromwerten beaufschlagt ist;
- Fig. 3: eine Darstellung ähnlich derjenigen nach Fig. 2, bei der der Anker mit höheren Stromwerten als bei der Darstellung nach Fig. 2 beaufschlagt ist; und sich daher in der Steuerkammer ein höherer Vorsteuerdruck einstellt und die Dämpfung im System ansteigt;
- Fig. 4: eine Darstellung zur Erläuterung der Fail-Safe-Funktion der erfindungsgemäßen Dämpfungsventilanordnung;
- Fig. 5: ein Diagramm mit dem sich in der Steuerkammer einstellenden Steuerdruck, aufgetragen über dem Steuerstrom, der zur Beaufschlagung des Ankers zugeführt wird;
- Fig. 6: eine teilweise geschnittene Darstellung eines Teleskopfedergabelbeins mit einer im Bereich des oberen Endes des Teleskopfedergabelbeins angeordneten Dämpfungsventilanordnung nach einer Ausführungsform gemäß der vorliegenden Erfindung;
- Fig. 6A: eine vergrößerte Darstellung des Ausschnitts "A" nach Fig. 6; und
- Fig. 7: eine teilweise geschnittene Darstellung eines Stoßdämpfers mit einer Dämpfungsventilanordnung nach einer Ausführungsform gemäß der vorliegenden Erfindung.

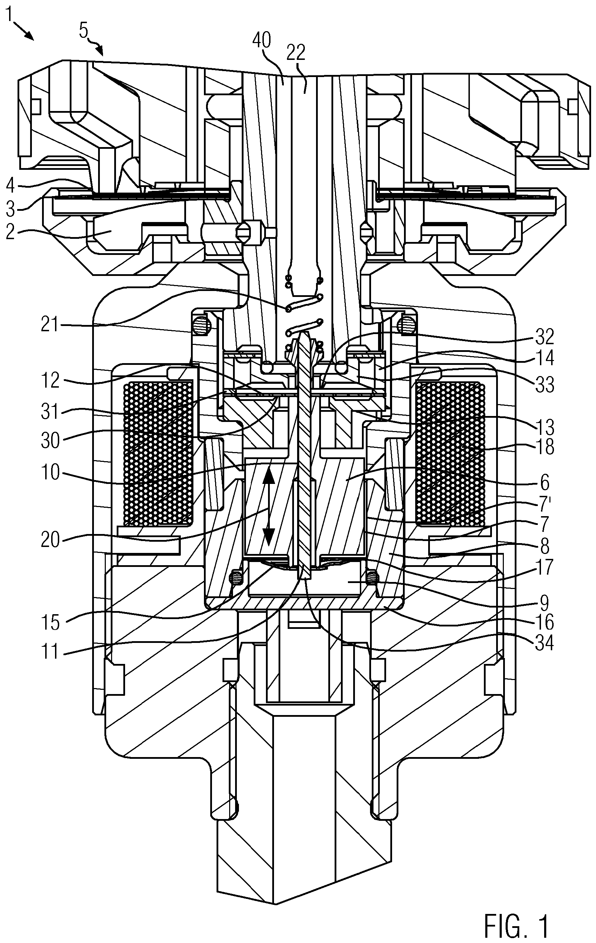

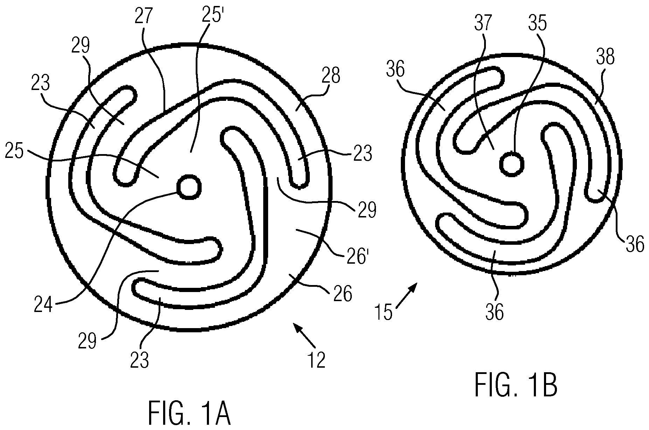

Fig. 1 der Zeichnung zeigt eine teilweise geschnittene Darstellung einer Ausführungsform einer Dämpfungsventilanordnung 1 nach der vorliegenden Erfindung.

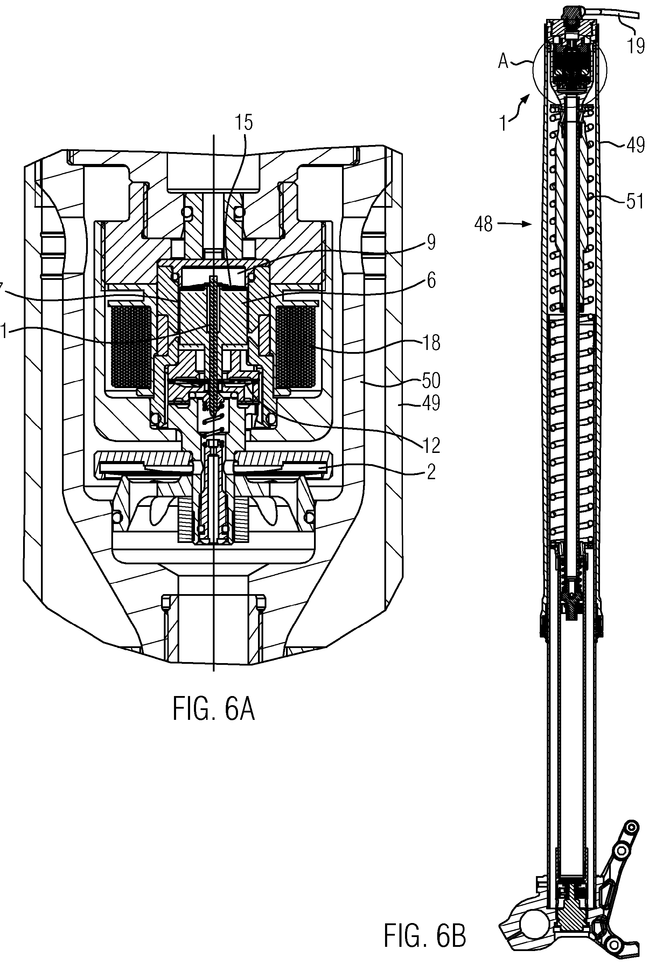

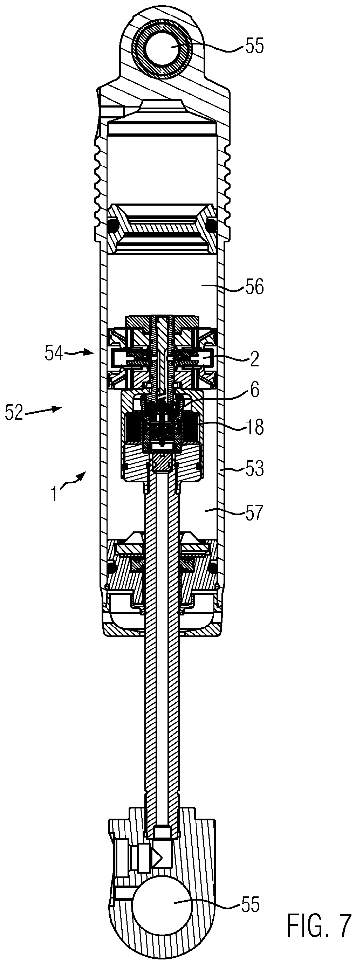

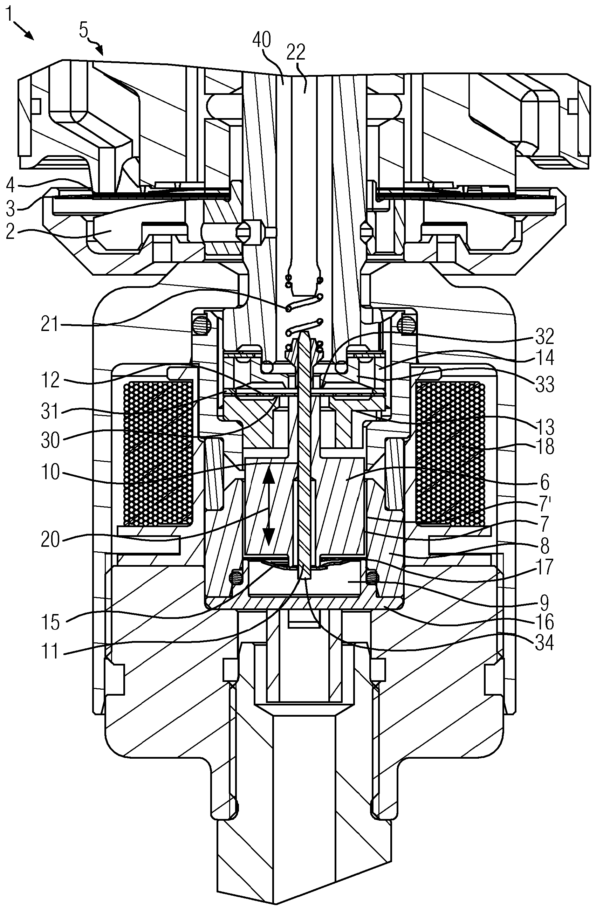

Die Dämpfungsventilanordnung 1 kann als Druckregeleinheit beispielsweise in einem Teleskopfedergabelbein eines Motorrads, wie es in Fig. 6 der Zeichnung dargestellt ist, oder in einem Stoßdämpfer für einen Personenkraftwagen, wie er in Fig. 7 der Zeichnung dargestellt ist, angeordnet sein.

Sowohl das Teleskopfedergabelbein als auch der Stoßdämpfer führen bei einer Fahrt mit dem entsprechenden Fahrzeug oszillierende Bewegungen aus und sind daher zur Dämpfung der Schwingungsbewegung mit einem Schwingungsdämpfer ausgestattet, bei dem es sich beispielsweise um eine mit einer Federscheibe oder einem Federscheibenpaket versehene Einrichtung handeln kann, die einen Strömungsdurchlaß für ein darin strömendes Arbeitsfluid geregelt oder gesteuert freigeben kann. Über den freigegebenen Öffnungsquerschnitt kann der der Strömungsbewegung entgegengesetzte Widerstand eingestellt werden und damit der Strömungsbewegung eine Dämpfungskraft entgegengesetzt werden.

Zur Steuerung des Öffnungsquerschnitts kann eine Steuerkammer vorgesehen sein, die mit einem Vorsteuerdruck beaufschlagt wird, der der Öffnungsbewegung der Federscheibe oder des Federscheibenpakets eine Druckkraft entgegengesetzt, so dass über eine Veränderung des Vorsteuerdrucks der Öffnungsquerschnitt und damit die Dämpfungskraft modifiziert werden kann.

Durch die Schwingungsbewegung des Teleskopfedergabelbeins beziehungsweise des Stoßdämpfers wird die Strömung des Arbeitsfluids ausgelöst, welches gleichzeitig als Steuerfluid für die Bereitstellung des Vorsteuerdrucks in der Steuerkammer verwendet werden kann.

Die Dämpfungsventilanordnung 1 dient der Steuerung des sich in einer Steuerkammer 2 einstellenden Vorsteuerdrucks. Mit dem Vorsteuerdruck wird ein Federscheibenpaket 3 beaufschlagt, welches einen Strömungsdurchlaß 4 für das Arbeitsfluid in durch den Vorsteuerdruck beeinflusster Weise gesteuert öffnen kann. Das Federscheibenpaket 3 ist Teil eines ganz allgemein mit dem Bezugszeichen 5 bezeichneten Schwingungsdämpfers.

Die erfindungsgemäße Dämpfungsventilanordnung 1 besitzt einen Anker 6 der in einer Ankerbohrung 7 eines Gehäuses 8 angeordnet ist und zwar derart, dass er allseits von Arbeitsfluid umgeben ist. Diese Ausbildung macht die Anordnung von Dichtungseinrichtungen, die ein Eindringen von Arbeitsfluid in den Arbeitsraum 9 des Ankers 6 vermeiden würden, obsolet. Der Anker 6 ist dabei so ausgebildet, dass die auf ihn vom Arbeitsfluid wirkende resultierende Fluidkraft ausgeglichen ist.

Der Anker 6 besitzt eine mittige Bohrung 10, in der ein Führungsstift 11 angeordnet ist, an der eine in Fig. 1A dargestellte erste Federscheibe 12 angeordnet ist. Die Federscheibe 12 ist zwischen einem rohrstückförmigen Ankergegenstück 13 und einem ebenfalls rohrstückförmigen Hülsenkörper 14 eingespannt.

An dem der Anordnungsstelle der ersten Federscheibe 12 gegenüberliegenden Endbereich des Führungsstifts 11 ist eine zweite Federscheibe 15 angeordnet, die in Fig. 1B dargestellt ist. Die zweite Federscheibe 15 ist dabei radial außen zwischen einem Deckel 16 und einem Bund 17 des Gehäuses 8 eingespannt. Die beiden Federscheiben 12, 15 halten den Anker 6 im Abstand zu einer Innenumfangswand 7' der Ankerbohrung 7.

Die beiden Federscheiben 12, 15 befinden sich jeweils so mit dem Führungsstift 11 in Eingriff, dass sie bei einer Axialbewegung des Führungsstifts 11 in Richtung seiner Längsmittelachse zusammen mit dem Führungsstift bewegt werden, sich also der jeweilige radial innenliegende Bereich der Federscheiben aufgrund der radial außen jeweils vorliegenden Einspannung relativ zum radial außen liegenden Bereich verlagert und so eine rückstellende Federkraft erzeugt wird.

Die beiden Federscheiben 12, 15 sind aufgrund ihrer jeweiligen Konfiguration, die anhand von Fig. 1A und Fig. 1B ersichtlich ist, radial steif, aber biegeweich ausgebildet, also in Richtung der in Axiallängsrichtung des Führungsstifts 11 verlaufenden Richtung weich ausgebildet. Diese Konfiguration sorgt dafür, dass der Anker 6 zusammen mit dem Führungsstift 11 mit niedrigen Stromwerten sehr schnell in Axiallängsrichtung des Führungsstifts 11 bewegt werden kann und daher eine sehr schnelle Verstellbewegung des Ankers 6 möglich ist.

Zur Verstellung des Ankers 6 und damit zur Veränderung des in der Steuerkammer 2 herrschenden Vorsteuerdrucks ist eine elektrisch beaufschlagbaren Spule 18 vorgesehen, die den Anker 6 radial umgibt und mittels in Fig. 6B ersichtlicher Anschlussleitungen 19 bestromt werden kann.

Die Bestromung der Spule 18 führt dazu, dass sich ein Magnetfeld aufbaut, mit dem der Anker 6 in Richtung des Doppelpfeils 20 verlagert werden kann, wobei die Federscheiben 12, 15 eine der Verlagerungsbewegung durch die Bestromung des Ankers 6 entgegen gerichtete nur sehr kleine Federkraft aufbauen - aufgrund der sehr geringen Steifigkeit in axialer Richtung - und eine Ansteuerung der Spule 18 mit niedrigeren Stromwerten als denjenigen Stromwerten, die die Verlagerungsbewegung ausgelöst haben oder ein Abschalten der Stromversorgung, zu einer Rückstellbewegung des Ankers 6 in der Ankerbohrung 7 führt.

Die Rückstellbewegung wird dabei von der in Fig. 1 dargestellten Feder 21 in der Form einer Schraubendruckfeder bewirkt, deren Vorspannung über eine Einstellschraube 22 verändert werden kann.

Fig. 1A zeigt eine Draufsichtansicht auf die erste Federscheibe 12, die eine kreisscheibenförmige Konfiguration aufweist mit drei Ausnehmungen 23, eine mittige Durchgangsbohrung 24 für die Aufnahme des Führungsstifts 11, einen radial innen liegenden Bereich 25 mit der Durchgangsbohrung 24 und einen radial außen liegenden Bereich 26, an dem die erste Federscheibe 12 eingespannt werden kann. Der radial innen liegende Bereich bildet einen Innenring 25' ohne Ausnehmungen aus und der radial außen liegende Bereich bildet einen Aussenring 26' ohne Ausnehmungen aus.

Wie es ohne weiteres ersichtlich ist, erstrecken sich die Ausnehmungen 23 vom radial innen liegenden Bereich 25 zum radial außen liegenden Bereich 26 hin und zwar derart, dass sie vom radial innen liegenden Bereich 25 von etwa der Hälfte des Radius der Federscheibe 12 ausgehend zunächst in einem Bereich 27 weitgehend der Umfangsrichtung der Federscheibe 12 folgend verlaufen und dann in einem weiteren Bereich 28 entlang eines Teilumfangs der Federscheibe 12 im Abstand zum Außenumfang der Federscheibe 12 verlaufen.

Diese Konfiguration besitzt den Vorteil, dass eine weitgehende Unabhängigkeit der radialen Steifigkeit der Federscheibe 12 von der Kraftangriffsrichtung einer zur Abstützung des Ankers 6 notwendigen radialen Kraft erreicht wird und es sich als vorteilhaft herausgestellt hat, auf diese Weise drei Abstützungen 29 zur radialen Abstützung des Ankers 6 gegen das Gehäuse 8 zur Verfügung zu haben.

Darüber hinaus besitzt diese Konfiguration erhebliche Vorteile bei der Fertigung der Federscheibe 12, da diese durch einen einfachen Stanzvorgang hergestellt werden kann, was bei einer vergleichbaren Federscheibe mit einer Vielzahl von rein radial verlaufenden Abstützungen, wie sie beispielsweise bei einer Tellerfeder mit Federzungen vorhanden sind, aufgrund der zum Einbau in einem Teleskopfedergabelbein nötigen Miniaturisierung kaum möglich ist.

Das Flächenverhältnis der Federscheibe 12 im Sinne von der Fläche der Ausnehmungen zu der Fläche einer Federscheibe ohne Ausnehmung kann Werte im Bereich von 1 zu 1,5 bis etwa 1 zu 3 betragen. Auf diese Weise kann eine Federscheibe 12 hergestellt werden, die eine hohe radiale Steifigkeit, aber eine niedrige Steifigkeit in Richtung der Auslenkbewegung entlang der Axiallängsrichtung des Führungsstifts 11 besitzt.

Wie es darüber hinaus anhand von Fig. 1 der Zeichnung ersichtlich ist, liegt die erste Federscheibe 12 mit dem radial innen liegenden Bereich 25 an einem Umlaufbund 30 des rohrstückförmigen Ankergegenstücks 13 an. Am radial äußeren Bereich 26 wird die Federscheibe 12 von einem Distanzring 31 übergriffen, so dass sich der radial innenliegende Bereich 25 im Abstand zu einem Umlaufbund 32 eines Ringkörpers 33 angeordnet befindet.

Fig. 1B zeigt die am Endbereich 34 des Führungsstifts 11 angeordnete zweite Federscheibe 15. Diese besitzt eine innen liegende Ausnehmung 35, die vom Führungsstift 11 durchsetzt wird und in einer zur Ausbildung der ersten Federscheibe 12 vergleichbaren Weise drei Ausnehmungen 36, die sich von einem radial innen liegenden Bereich 37 von etwa der Hälfte des Radius der zweiten Federscheibe 15 ausgehend in Richtung zum Umriss der Federscheibe 15 in erstrecken und dann in einem Bereich 38 im Abstand zum Umfang der zweiten Federscheibe 15 entlang verlaufen. Auf diese Weise kann auch das Verhältnis der radialen Steifigkeit zur axialen Steifigkeit der zweiten Federscheibe 15 eingestellt werden, wobei auch das Flächenverhältnis der Ausnehmungen 36 der zweiten Federscheibe 15 zur Fläche der Federscheibe 15 ohne Ausnehmungen im Bereich von etwa 1 zu 1,5 bis etwa 1 zu 3 beträgt.

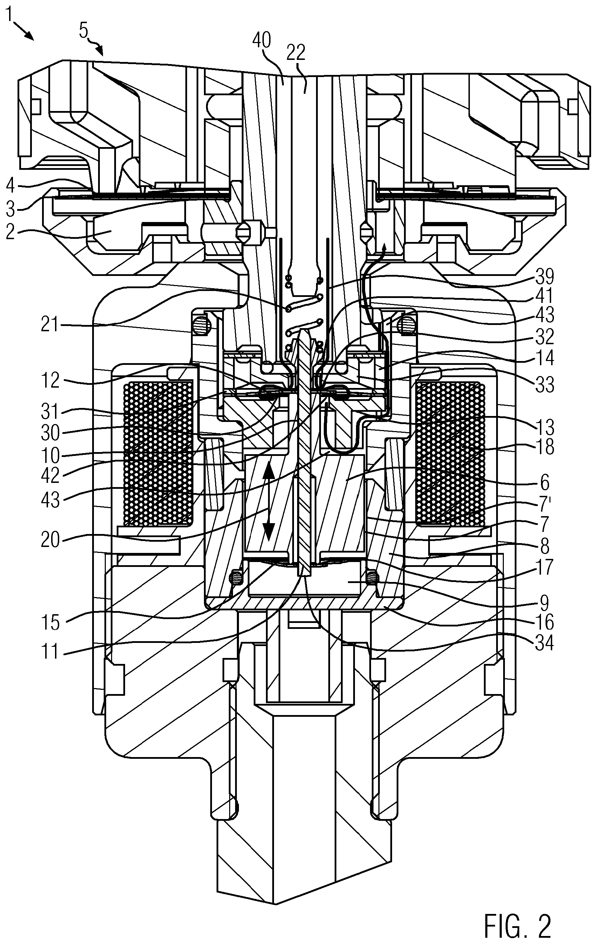

Fig. 2 der Zeichnung zeigt eine Darstellung ähnlich derjenigen nach Fig. 1. Nach Fig. 2 wird der Anker 6 mit niedrigen Stromwerten beaufschlagt, und daher ist der sich in der Steuerkammer 2 des Schwingungsdämpfers einstellende Vorsteuerdruck niedrig. Dies führt dazu, dass das Dämpfungsarbeit leistende Arbeitsventil in Form der Federscheiben nur mit geringer Druckkraft beaufschlagt wird und sich eine geringe Dämpfung einstellt, da der für die Strömung des Arbeitsfluids auf Grund der Ein- oder Ausfederbewegung des Teleskopfedergabelbeins beziehungsweise des Stoßdämpfers zur Verfügung stehende Öffnungsquerschnitt groß ist und der Strömung wenig Widerstand entgegen gesetzt wird.

Die Bestromung des Ankers 6 führt dazu, dass sich der Anker 6 so weit gegen die Wirkung der Feder 21 in Richtung nach oben gerichtet bewegt, dass sich die erste Federscheibe 12 vom Umlaufbund 30 des Ankergegenstücks 13 abhebt. Bei dieser Stellung befindet sich die Federscheibe 12, die auch als Biegeshim bezeichnet werden kann, ungefähr in der axialen Mitte zwischen dem Umlaufbund 30 und dem Umlaufbund 32 des Ringkörpers 33 angeordnet. Durch den großen Abstand zwischen der ersten Federscheibe 12 und dem Umlaufbund 32 tritt keine wesentliche Drosselung des Stroms an Arbeitsfluid auf und der Druckabfall ist sehr gering. In dieser Stellung des Ankers 6 ist die Dämpfung im System gering, da in der Steuerkammer 2 nur ein geringer Steuerdruck auf die dort angeordneten Arbeitsventile wirkt, es stellt sich die gewünschte niedrige Dämpfung ein.

Fig. 2 der Zeichnung zeigt auch, dass der Arbeitsraum 9 mit Arbeitsfluid gefüllt ist und darüber hinaus ist anhand der die Strömungsrichtung des Arbeitsfluids anzeigen der Pfeile 39 auch ersichtlich, dass sich das Arbeitsfluid entlang des um die Einstellschraube 22 herum gebildeten Ringraums 40 in Richtung zu der Durchströmungsöffnung 41 bewegt, die Durchströmungsöffnung 41 passiert, die Ausnehmungen 23 der ersten Federscheibe 12 durchströmt, eine zwischen der Unterseite der ersten Federscheibe 12 und dem Umlaufbund 30 des Ankergegenstücks 13 gebildete Durchströmungsöffnung 42 passiert, in einen zwischen dem Anker 6 und der Ankerbohrung 7 gebildeten Ringraum eintritt und von dort über einen zwischen dem Ankergegenstück 13 sowie dem Hülsenkörper 14 und dem Gehäuse 8 gebildeten Ringraum 43 passiert und schließlich wieder in Richtung oberhalb der Dämpfungsventilanordnung 1 abströmt.

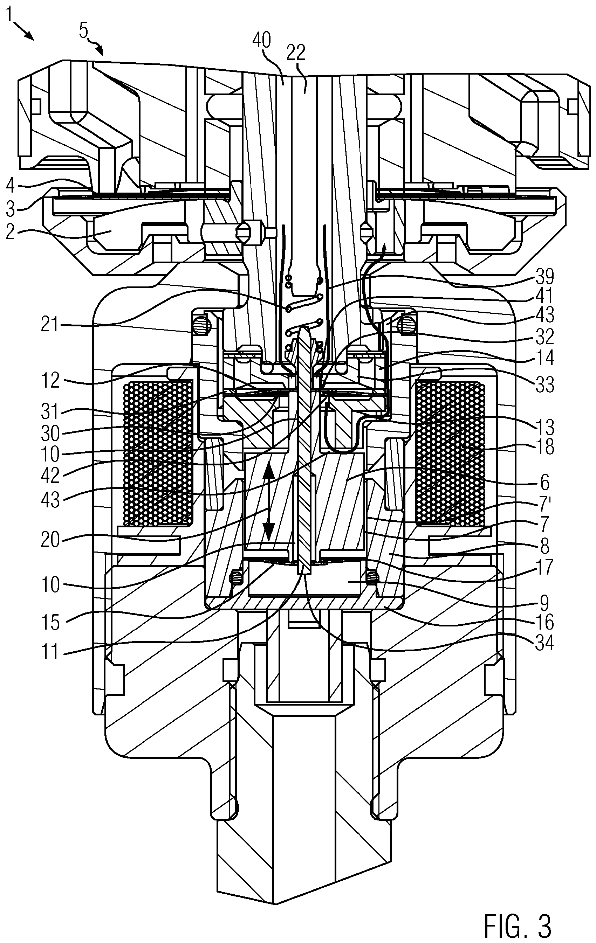

Fig. 3 der Zeichnung zeigt eine Darstellung ähnlich derjenigen nach Fig. 2, bei der der Anker 6 mit höheren Stromwerten als bei der Darstellung nach Fig. 2 beaufschlagt ist und sich daher in der Steuerkammer 2 ein höherer Vorsteuerdruck einstellt und die Dämpfung im System ansteigt.

Über eine Bestromung der Spule 18 mit höheren Stromwerten als bei der Stellung des Ankers 6 nach Fig. 2 wird erreicht, dass sich der Anker 6 in der Zeichnungsebene weiter in Richtung nach oben bewegt, als dies bei der Stellung des Ankers 6 nach Fig. 2 der Fall ist.

Durch die Bestromung der Spule 18 mit hohen Stromwerten bewegt sich der Anker 6 soweit gegen die Wirkung der Feder 21 in Richtung nach oben, dass der radial innenliegende Bereich 25 der ersten Federscheibe 12 die Durchströmungsöffnung 41 zwischen der Oberseite der ersten Federscheibe 12 und dem Umlaufbund 32 des Ringkörpers 33 nahezu verschließt. Der Drosselquerschnitt geht auf diese Weise gegen null und es stellt sich eine Druckregelung ein. Der Steuerdruck in der Steuerkammer 2 steigt an, die dort angeordneten Arbeitsventile werden mit hohen Druckkräften beaufschlagt, der für die Durchströmung der von den Arbeitsventilen freigegebenen Öffnungsquerschnitt sinkt und die Dämpfung im System steigt.

Durch das Gleichgewicht zwischen der von der Spule 18 erzeugten Kraft, dem Druck im System, der Federkraft der Feder 21 und der Federkräfte der beiden Federscheiben 12, 15 kann der Steuerdruck in der Steuerkammer 2 eingestellt werden. Nach der Durchströmung des Ringraums 43 strömt das Arbeitsfluid in Richtung der oberhalb der Dämpfungsventilanordnung 1 angeordneten und die Arbeitsventile tragenden Kolbeneinheit ab.

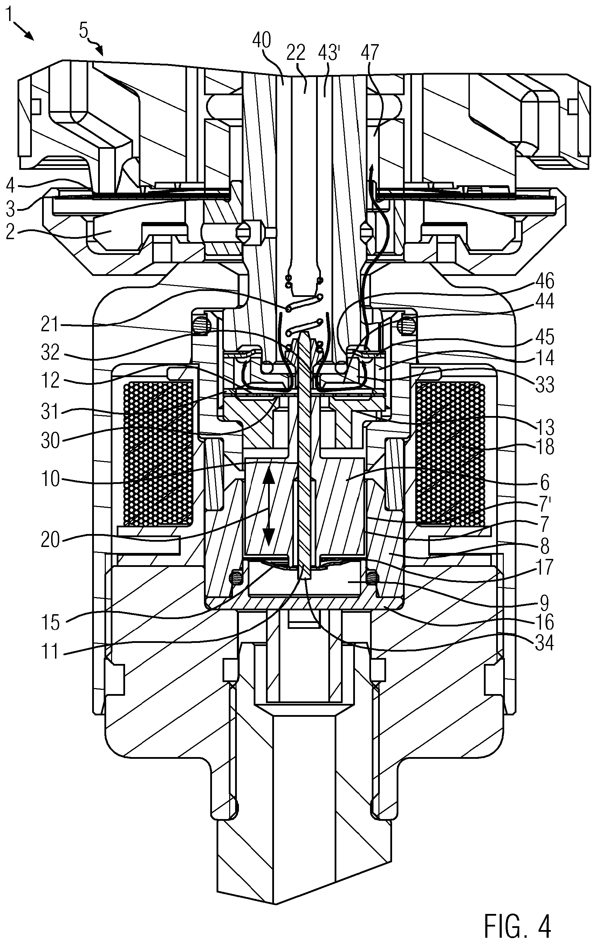

Fig. 4 der Zeichnung zeigt eine Darstellung zur Erläuterung der Fail-Safe-Funktion der erfindungsgemäßen Dämpfungsventilanordnung. Diese Funktionalität ist für den Fall gedacht, dass die Stromversorgung der elektrisch beaufschlagbaren Spule 18 eine Fehlfunktion erleidet und die Spule 18 nicht mehr bestromt werden kann.

Durch die Vorspannung der Feder 21 wird die erste Federscheibe 12 gegen den Umlaufbund 30 des Ankergegenstücks 13 gedrückt. Wird durch die Federbewegung des Teleskopfedergabelbeins oder des Stoßdämpfers Arbeitsfluid über einen Fluidzuströmdurchlass 43' in den Ringraum 44 zwischen dem Ankergegenstück 13 und dem Ringkörper 33 gedrückt, so führt dieser Druckanstieg dazu, dass eine Federringscheibe 45 einen Bypassdurchlass 46 frei gibt, so dass Arbeitsfluid bei einem im Ringraum 44 herrschenden vorbestimmten Öffnungsdruck von dem Ringraum 40 über den Ringraum 44 und den Bypassdurchlass 46 zu einem stromabwärts gerichteten Fluiddurchlass 47 strömt.

Damit kann ein moderater Dämpfkraftverlauf erzielt werden, der zwischen dem durch die Ankerposition nach Fig. 2 und die Ankerposition nach Fig. 3 erzielbaren Dämpfkraftverlauf liegt.

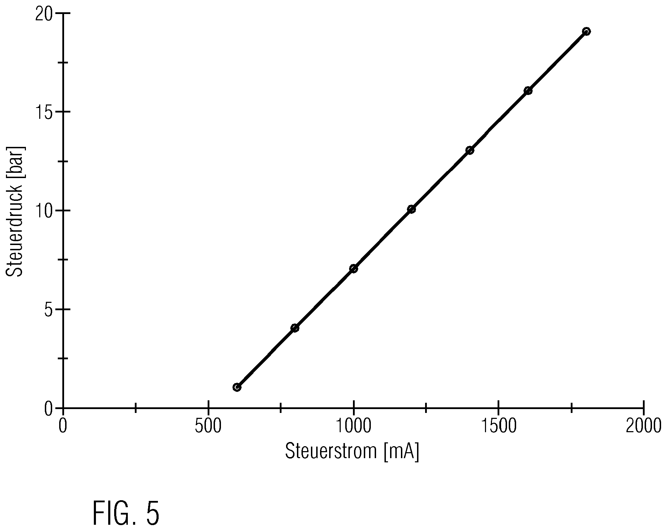

Fig. 5 der Zeichnung zeigt den Verlauf des Steuerdrucks in der Steuerkammer 2, aufgetragen über dem die Spule 18 beaufschlagenden Steuerstrom. Der lediglich exemplarisch in Fig. 5 dargestellte Verlauf des Steuerdrucks von etwa 2 bar bis etwa 20 bar kann innerhalb eines Zeitfensters von weniger als 10 ms durchfahren werden, das heißt der Vorsteuerdruck in der Steuerkammer 2 kann innerhalb dieses schmalen Zeitfenster des von etwa 10 ms vom minimalen Wert bis zum maximalen Wert hin verändert werden. Dies macht deutlich, dass durch die erfindungsgemäße Dämpfungsventilanordnung aufgrund der Lagerung des Ankers 6 mit den beiden Federscheiben 12, 15 eine ausgesprochen schnelle Veränderung des Steuerdrucks in der Steuerkammer 2 möglich ist. Hier profitiert die erfindungsgemäße Dämpfungsventilanordnung eindeutig davon, dass das System nicht an Wandanhaftungseffekten des Ankers 6 in der Ankerbohrung 7 leidet und darüber hinaus auch unempfindlich gegen Verschmutzungen im Arbeitsfluid ist.

Fig. 6 zeigt ein Teleskopfedergabelbein zur Bildung einer nicht näher dargestellten Teleskopfedergabel eines Motorrads, mit einer im Bereich des oberen Endes des Teleskopfedergabelbeins 48 angeordneten Dämpfungsventilanordnung 1 nach der vorliegenden Erfindung. Die Dämpfungsventilanordnung 1 kann vom oberen Ende des Teleskopfedergabelbeins 48 aus in ein Außenrohr 49 eingesetzt werden und wird über die bereits erwähnten Anschlussleitungen 19 mit Strom versorgt.

Fig. 6A zeigt eine vergrößerte Darstellung des Ausschnitts "A" nach Fig. 6 mit dem Außenrohr 49 und der zusammen mit einer Hülse 50 zur Abstützung und Führung der in Fig. 6 dargestellten Hauptfeder 51 angeordneten Dämpfungsventilanordnung 1. Diese Anordnung macht deutlich, dass die Anordnung 1 unter anderem aufgrund der Miniaturisierung durch den Entfall von Dichtungseinrichtungen zum Abdichten des Arbeitsraums 9 für den Anker 6 und die radiale und axiale Führung des Ankers 6 zusammen mit dem Führungsstift 11 in der Ankerbohrung 7 und der aufgrund des Entfalls von Wandanhaftungseffekten in der Ankerbohrung 7 geringen, von der Spule 18 erzeugten benötigten Magnetkraft - die Spule 18 kann daher ebenfalls mit kleinen Gesamtabmessungen ausgebildet werden - für die Anordnung in den beengten Platzverhältnissen eines Rohres eines Teleskopfedergabelbeins 48 tauglich ist.

Der Anker 6 wird genauso, wie bei der Ausführungsform nach Fig. 1 von zwei Federscheiben 12, 15 in der Ankerbohrung 7 radial und axial geführt und kann den Vorsteuerdruck in der Steuerkammer 2 schnell verändern.

Schließlich ist in Fig. 7 ein Stoßdämpfer 52 gezeigt, der beispielsweise in einem Personenkraftwagen eingesetzt werden kann. Der Stoßdämpfer 52 weist ein Außenrohr 53 und eine Dämpfungsventilanordnung 1 auf, die zusammen mit einem Arbeitskolben 54 im Außenrohr axial verschiebbar angeordnet ist. Kommt es zu einer Relativbewegung der beiden Befestigungsaugen 55, die am Fahrwerk und an der Karosserie des nicht dargestellten Personenkraftwagens festgelegt werden können, dann führt dies zu einer axialen Verlagerungsbewegung der Dämpfungsventilanordnung 1 zusammen mit dem Arbeitskolben 54 in dem Außenrohr 53.

Dadurch wird Arbeitsfluid zwischen den beiden Fluidkammern 56, 57 verschoben, das durch Strömungskanäle zur Dämpfungsventilanordnung 1 gelangt und aufgrund der Verlagerungsbewegung des Ankers 6 durch die Spule 18 auch zur Einstellung des Vorsteuerdrucks in der Steuerkammer 2 eingesetzt werden kann.

Mittels der Veränderung des Vorsteuerdrucks in der Steuerkammer sind die Regelungskräfte deutlich geringer im Vergleich zu einer etwaigen direkten Regelung der Dämpfungskräfte. Auch kann dadurch der Strombedarf für die Ansteuerung der Spule verringert werden. Durch die axiale und radiale Führung des Ankers mittels zweier Federscheiben wird erreicht, dass der Anker nicht mit anderen Bauteilen in Berührung kommt und somit nahezu reibungsfrei arbeitet und insbesondere kein direkter Kontakt des Ankers mit der Ankerbohrung stattfindet.

Die erfindungsgemäße Dämpfungsventilanordnung sorgt sowohl im Zweirad als auch im Vierradbereich für einen deutlichen Anstieg des Komforts. Der höhere Fahrkomfort wird dadurch erreicht, dass durch die schnell veränderliche Dämpfung die Schwingungen der Karosserie beziehungsweise des Fahrwerks und der Reifen erheblich verringert werden.

Die Dämpfungsventilanordnung macht es aufgrund ihrer schnellen Regelungsfähigkeit auch möglich, die Amplituden der Eigenfrequenz der ungefederten Massen in Form von beispielsweise Reifen und Nabe sowie der Masse des Aufbaus in Form beispielsweise einer Fahrzeugkarosserie und des Motors zu verringern. Ein Aufschwingen des Fahrzeugs durch Unebenheiten kann dadurch ebenfalls verringert werden, ebenso kann die Neigung des Fahrzeugs zum Nachschwingen nach dem Überfahren eines Hindernisses reduziert werden.

Die durch die erfindungsgemäße Dämpfungsventilanordnung erreichte Stabilisierung des Aufbaus des Fahrzeugs beim Überfahren von Hindernissen und Unebenheiten führt dazu, dass die Fahrsicherheit erhöht wird, die Traktion der Antriebsräder des Fahrzeugs wird erhöht, da die Zeitdauer eventuell fehlenden Bodenkontakts der Antriebsräder verringert wird und schließlich kann durch die rasche Anpassung der Dämpfungskraft an die Gegebenheiten der Fahrbahnoberfläche beziehungsweise dem Fahrbahnuntergrund auch der Bremsweg verringert werden.

Das Problem einer weichen Dämpfung, nämlich die Nachschwingeffekte des Fahrwerks von Fahrzeugen können durch die erfindungsgemäße Dämpfungsventilanordnung verringert werden. Die Dämpfungsventilanordnung ermöglicht eine Veränderung der Dämpfungskraft innerhalb weniger Millisekunden, die Dämpfungskraft kann während des Betriebs des Fahrzeugs laufend verändert werden und an die jeweiligen Fahrsituationen angepasst werden.

Zudem ermöglicht die erfindungsgemäße Dämpfungsventilanordnung auch, unterschiedlichen Belastungssituationen durch unterschiedliche Zuladungen des Fahrzeugs gerecht zu werden, ohne dass der Fahrer am Fahrzeug Veränderungen am Feder-Dämpfersystem durchführen muss, wie dies bislang der Fall war dergestalt, dass die Dämpfung der Zuladung entsprechend statisch erhöht oder verringert werden musste.

Schließlich eignet sich die erfindungsgemäße Dämpfungsventilanordnung auch für den Rennsport, da das Dämpfungsverhalten gleichsam in Echtzeit verändert werden kann, ohne dass dazu zeitaufwändige Einstellarbeiten am Fahrzeug durchgeführt werden müssten. Auch entfällt der ansonsten notwendigen Einsatz von Werkzeug zur Veränderung des Dämpfungsverhaltens eines Schwingungsdämpfers.

Hinsichtlich vorstehend im einzelnen nicht näher erläuterter Merkmale der Erfindung wird in übrigen ausdrücklich auf die Patentansprüche und die Zeichnung verwiesen.

### Bezugszeichenliste

- 1: Dämpfungsventilanordnung
- 2: Steuerkammer
- 3: Federscheibenpaket, Arbeitsventil
- 4: Strömungsdurchlaß
- 5: Schwingungsdämpfer
- 6: Anker
- 7: Ankerbohrung
- 7': Innenumfangswand
- 8: Gehäuse
- 9: Arbeitsraum
- 10: Bohrung
- 11: Führungsstift
- 12: erste Federscheibe
- 13: Ankergegenstück
- 14: Hülsenkörper
- 15: zweite Federscheibe
- 16: Deckel
- 17: Bund
- 18: Spule
- 19: Anschlussleitungen
- 20: Doppelpfeil
- 21: Feder
- 22: Einstellschraube
- 23: Ausnehmung
- 24: Durchgangsbohrung
- 25: radial innen liegender Bereich
- 25': Innenring
- 26: radial außen liegender Bereich
- 26': Aussenring
- 27: Bereich
- 28: Bereich
- 29: Abstützung
- 30: Umlaufbund
- 31: Distanzring
- 32: Umlaufbund
- 33: Ringkörper
- 34: Endbereich
- 35: Ausnehmung
- 36: Ausnehmung
- 37: radial innen liegender Bereich
- 38: Bereich
- 39: Pfeil
- 40: Ringraum
- 41: Durchströmungsöffnung
- 42: Durchströmungsöffnung
- 43: Ringraum
- 43': Fluidzuströmdurchlass
- 44: Ringraum
- 45: Federringscheibe
- 46: Bypassdurchlass
- 47: Fluiddurchlass
- 48: Teleskopfedergabelbein
- 49: Außenrohr
- 50: Hülse
- 51: Hauptfeder
- 52: Stoßdämpfer
- 53: Außenrohr
- 54: Arbeitskolben
- 55: Befestigungsauge
- 56: Fluidkammer
- 57: Fluidkammer

## Patentansprüche

1. Dämpfungsventilanordnung (1) zur Steuerung eines eine Steuerkammer (2) einer Dämpfungseinrichtung eines Schwingungsdämpfers (5) durch ein Steuerfluid beaufschlagenden Vorsteuerdrucks, mit einem mittels einer elektrisch beaufschlagbaren Spule (18) verlagerbaren und in einem Gehäuse (8) vorgesehenen Anker (6), der einen Führungsstift (11) aufweist, an dem eine erste Federscheibe (12) vorgesehen ist wobei die erste Federscheibe (12) einen radial innenliegenden Bereich (25) aufweist, der frei von Ausnehmungen ist und der Bereich zur Veränderung der Durchströmungsöffnung (41, 42) der Dämpfungsventilanordnung (1) zwischen dem innenliegenden Bereich und einem mit einem umlaufenden Bund (30, 32) versehenen Ringkörper (33) oder Hülsenkörper relativ zum Bund (30, 32) verlagerbar ist, **dadurch gekennzeichnet, dass** der Führungsstift (11) den Anker (6) durchsetzt und an dem der Durchströmungsöffnung (41, 42) gegenüberliegenden Endbereich eine zweite Federscheibe (15) aufweist und dass die Federscheiben (12, 15) den Führungsstift (11) radial nach außen abstützen.

2. Dämpfungsventilanordnung (1) nach Anspruch 1, **dadurch gekennzeichnet, dass** die Federscheiben (12, 15) den Anker (6) im Gehäuse (8) radial und axial führen und im Abstand zu einer Innenumfangswand (7') des Gehäuses (8) halten.

3. Dämpfungsventilanordnung (1) nach Anspruch 1 und 2, **dadurch gekennzeichnet, dass** der Anker (6) im Gehäuse (8) derart angeordnet ist, dass er von Steuerfluid umgebbar ist.

4. Dämpfungsventilanordnung (1) nach einem der vorstehenden Ansprüche, **dadurch gekennzeichnet, dass** die Federscheiben (12, 15) eine mittige Ausnehmung (24, 35) zur Aufnahme des Führungsstifts (11) aufweisen und mit Ausnehmungen (23, 36) versehen sind, die sich von einem radial innenliegenden Bereich (25, 37) der Federscheiben (12, 15) zu einem radial außen liegenden Bereich (26, 38) der Federscheiben (12, 15) erstrecken und am radial außen liegenden Bereich (26, 38) entlang einer Teilumfangs der Federscheiben (12, 15) im Abstand zum Aussenumfang verlaufen.

5. Dämpfungsventilanordnung (1) nach einem der vorstehenden Ansprüche, **dadurch gekennzeichnet, dass** die erste Federscheibe (12) einen radial innenliegenden Bereich (25) aufweist, der frei von Ausnehmungen (23) ist und der Bereich zur Veränderung der Durchströmungsöffnung (41) zwischen dem innenliegenden Bereich (25) und einem mit einem umlaufenden Bund (32) versehenen Ringkörper (33) relativ zum Bund (32) verlagerbar ist.

6. Dämpfungsventilanordnung (1) nach einem der vorstehenden Ansprüche, **dadurch gekennzeichnet, dass** der Führungsstift (11) mittels einer betätigbaren Federeinrichtung (21) gegen die Wirkung der Federscheiben (12, 15) vorspannbar ist derart, dass die Durchströmungsöffnung (41, 42) vorbestimmt geöffnet ist.

7. Dämpfungsventilanordnung (1) nach einem der vorstehenden Ansprüche, **gekennzeichnet durch** einen von einer Federringscheibe (45) verschließbaren Bypassdurchlass (46), der bei einem vorbestimmten Öffnungsdruck einen Fluidstrom zwischen einem in Richtung zur ersten Federscheibe (12) verlaufenden Fluidzuströmdurchlass (43') und der Steuerkammer (2) und/oder einer Fluiddurchlass (47) frei gibt.

8. Dämpfungsventilanordnung (1) nach einem der vorstehenden Ansprüche, **dadurch gekennzeichnet, dass** mindestens eine Federscheibe (12, 15) mindestens eine Ausnehmung (23, 36) ) aufweist und das Verhältnis der Fläche der Ausnehmung (23, 36) der Federscheibe (12, 15) zur Fläche der Federscheibe (12, 15) ohne Ausnehmung (23, 36) etwa 1 zu 1,5 bis etwa 1 zu 3 beträgt.

9. Dämpfungsventilanordnung (1) nach einem der vorstehenden Ansprüche, **dadurch gekennzeichnet, dass** mindestens eine Federscheibe (12, 15) drei Ausnehmungen (23, 36) aufweist zwischen einem Innenring (25') ohne Ausnehmung und einem Aussenring (26') ohne Ausnehmung.

10. Dämpfungsventilanordnung (1) nach einem der vorstehenden Ansprüche, **dadurch gekennzeichnet, dass** mittels der einer Verschiebung des Steuerfluids bei einer Verlagerungsbewegung der Dämpfungsventilanordnung (1) entgegen gerichteten Druckkraft der Steuerdruck in der Steuerkammer (2) beeinflussbar ist, mittels dem ein Querschnitt eines Strömungsdurchlasses (4) eines Arbeitsventils (3) einer Dämpfungseinrichtung des Schwingungsdämpfers (5) steuerbar ist.

11. Dämpfungsventilanordnung nach einem der vorstehenden Ansprüche, **dadurch gekennzeichnet, dass** die Dämpfungsventilanordnung (1) zur Bereitstellung eines auf ein Arbeitsventil (3) in einer Steuerkammer (2) einer Dämpfungseinrichtung eines Schwingungsdämpfers (5) wirkenden Steuerdrucks im Bereich vom etwa 1 bar bis etwa 20 bar ausgebildet ist.

12. Dämpfungsventilanordnung (1) nach einem der vorstehenden Ansprüche, **dadurch gekennzeichnet, dass** die Dämpfungsventilanordnung (1) Bauteil eines Teleskopfedergabelbeins (48) oder einer Teleskopfedergabel oder eines Stoßdämpfers (52) eines Fahrzeugs ist.

13. Verfahren der Steuerung eines Vorsteuerdrucks in einer Steuerkammer (2) einer Dämpfungseinrichtung eines Schwingungsdämpfers (5) mittels eines magnetisch betätigten Ankers (6) einer Ventilanordnung (1), der die Fläche einer von einem Steuerfluid durchströmbaren Durchströmungsöffnung (41, 42) der Ventilanordnung (1) verändert, **dadurch gekennzeichnet, dass** mittels des Ankers (6) eine mit dem Anker (6) gekoppelte Federscheibe (12) relativ zu einem umlaufenden Bund (30, 32) verlagert wird und damit die Fläche der Durchströmungsöffnung (41, 42) zwischen Federscheibe (12) und Bund (30, 32) verändert wird und die Federscheibe (12) den Anker (6) relativ zu einem den Anker (6) aufnehmenden Gehäuse (8) radial und axial führt.

## Claims

1. Damping valve arrangement (1) for controlling a pilot pressure acting via a control fluid on a control chamber (2) of a damping device of a vibration damper (5), having an anchor (6), which can be shifted by means of a coil (18) which can be acted upon by electricity, and which is provided in a housing (8), said anchor having a guide pin (11), on which a first spring washer (12) is provided, wherein the first spring washer (12) has a radially internal region (25) that is free of recesses, and the region can be shifted in order to change the flow-through opening (41, 42) of the damping valve arrangement (1) between the interior region and a ring body (33) provided with a peripheral collar (30, 32) or sleeve body relative to the collar (30, 32), **characterised in that** the guide pin (11) passes through the anchor (6), and has a second spring washer (15) on the end region opposite the flow-through opening (41, 42), and **in that** the spring washers (12, 15) support the guide pin (11) radially outwards.

2. Damping valve arrangement (1) according to claim 1, **characterised in that** the spring washers (12, 15) guide the anchor (6) radially and axially in the housing (8), and keep it at a spacing from an inner peripheral wall (7') of the housing (8).

3. Damping valve arrangement (1) according to claim 1 and 2, **characterised in that** the anchor (6) is arranged in the housing (8) such that it can be surrounded by control fluid.

4. Damping valve arrangement (1) according to one of the preceding claims, **characterised in that** the spring washers (12, 15) have a central recess (24, 35) for receiving the guide pin (11), and are provided with recesses (23, 36) which extend from a radial interior region (25, 37) of the spring washers (12, 15) to a radial exterior region (26, 38) of the spring washers (12, 15), and extend on the radial exterior region (26, 38) along a partial periphery of the spring washers (12, 15) spaced apart from the outer periphery.

5. Damping valve arrangement (1) according to one of the preceding claims, **characterised in that** the first spring washer (12) has a radial interior region (25), which is free of recesses (23), and that to vary the flow-through opening (41), the region can be shifted between the interior region (25) and a ring body (33) provided with a peripheral collar (32) relative to the collar (32).

6. Damping valve arrangement (1) according to one of the preceding claims, **characterised in that** the guide pin (11) can be pretensioned against the effect of the spring washers (12, 15) by means of an actuatable spring device (21), such that the flow-through opening (41, 42) is opened in a pre-determined manner.

7. Damping valve arrangement (1) according to one of the preceding claims, **characterised by** a bypass passage (46), which can be closed by a spring washer (45), which bypass passage, at a pre-determined opening pressure, releases a liquid flow between a liquid flow aperture (43') running in the direction of the first spring washer (12) and the control chamber (2) and/or a liquid aperture (47).

8. Damping valve arrangement (1) according to one of the preceding claims, **characterised in that** at least one spring washer (12, 15) has at least one recess (23, 36), and the ratio of the surface area of the recess (23, 36) of the spring washer (12, 15) to the surface area of the spring washer (12, 15) without a recess (23, 36), is approx. 1 to 1.5 to 1 to 3.

9. Damping valve arrangement (1) according to one of the preceding claims, **characterised in that** at least one spring washer (12, 15) has three recesses (23, 36) between an inner ring (25') without a recess and an outer ring (26') without a recess.

10. Damping valve arrangement (1) according to one of the preceding claims, **characterised in that** the control pressure in the control chamber (2) can be influenced by means of the pressing force directed against a shift of the control fluid in the event of a shifting movement of the damping valve arrangement (1), by means of which a cross-section of a flow aperture (4) of a working valve (3) of a damping device of the vibration damper (5) can be controlled.

11. Damping valve arrangement according to one of the preceding claims, **characterised in that** the damping valve arrangement (1) is designed to provide a control pressure in the range of approx. 1 bar to approx. 20 bar acting on a working valve (3) in a control chamber (2) of a damping device of a vibration damper (5).

12. Damping valve arrangement (1) according to one of the preceding claims, **characterised in that** the damping valve arrangement (1) is a component of a telescopic suspension fork leg (48) or a telescopic suspension fork or a shock absorber (52) of a vehicle.

13. Method of controlling a pilot pressure in a control chamber (2) of a damping device of a vibration damper (5) by means of a magnetically actuated anchor (6) of a valve arrangement (1), which changes the surface area of a flow-through opening (41, 42) of the valve arrangement (1), which flow-through opening can be flowed through by a control liquid, **characterised in that**, by means of the anchor (6), a spring washer (12) coupled with the anchor (6) is displaced relative to a peripheral collar (30, 32), and thus the surface area of the flow-through opening (41, 42) between the spring washer (12) and the collar (30, 32) is changed, and the spring washer (12) guides the anchor (6) radially and axially relative to a housing (8) which receives the anchor.

## Revendications

1. Agencement de robinets d'amortissement (1) pour la commande d'une pression pilote alimentant une chambre de commande (2) d'un dispositif d'amortissement d'un amortisseur d'oscillations (5) par un fluide de commande, comportant un induit (6) pouvant être déplacé à l'aide d'une bobine (18) pouvant être alimentée électriquement et prévu dans un boîtier (8), lequel induit comporte une tige de guidage (11) sur laquelle une première rondelle élastique (12) est prévue, la première rondelle élastique (12) présentant une zone radialement intérieure (25) qui est exempte d'évidements et la zone pouvant être déplacée par rapport au collier (30, 32) pour modifier l'ouverture de passage (41, 42) de l'agencement de robinets d'amortissement (1) entre la zone intérieure et un corps annulaire (33) ou un corps en forme de manchon pourvu d'un collier (30, 32) circonférentiel, **caractérisé en ce que** la tige de guidage (11) traverse l'induit (6) et comporte, dans la zone d'extrémité opposée à l'ouverture de passage (41, 42), une seconde rondelle élastique (15), et **en ce que** les rondelles élastiques (12, 15) soutiennent la tige de guidage (11) radialement vers l'extérieur.

2. Agencement de robinets d'amortissement (1) selon la revendication 1, **caractérisé en ce que** les rondelles élastiques (12, 15) guident l'induit (6) radialement et axialement dans le corps (8) et le maintiennent à distance d'une paroi circonférentielle intérieure (7') du boîtier (8).

3. Agencement de robinets d'amortissement (1) selon les revendications 1 et 2, **caractérisé en ce que** l'induit (6) est disposé dans le boîtier (8) de telle sorte qu'il peut être contourné par le fluide de commande.

4. Agencement de robinets d'amortissement (1) selon l'une des revendications précédentes, **caractérisé en ce que** les rondelles élastiques (12, 15) présentent un évidement central (24, 35) destiné à recevoir la tige de guidage (11) et sont pourvues d'évidements (23, 36) qui s'étendent depuis une zone radialement intérieure (25, 37) des rondelles élastiques (12, 15) jusqu'à une zone radialement extérieure (26, 38) des rondelles élastiques (12, 15) et s'étendent sur la zone radialement extérieure (26, 38) le long d'une partie de la circonférence des rondelles élastiques (12, 15) à distance de la circonférence extérieure.

5. Agencement de robinets d'amortissement (1) selon l'une des revendications précédentes, **caractérisé en ce que** la première rondelle élastique (12) présente une zone radialement intérieure (25) qui est exempte d'évidements (23) et la zone destinée à modifier l'ouverture de passage (41) entre la zone intérieure (25) et un corps annulaire (33) pourvu d'un collier (32) circonférentiel peut être déplacée par rapport au collier (32).

6. Agencement de robinets d'amortissement (1) selon l'une des revendications précédentes, **caractérisé en ce que** la tige de guidage (11) peut être précontrainte contre l'action des rondelles élastiques (12, 15) à l'aide d'un dispositif élastique (21) actionnable, de telle sorte que l'ouverture de passage (41, 42) soit ouverte de manière prédéfinie.

7. Agencement de robinets d'amortissement (1) selon l'une des revendications précédentes, **caractérisé par** un passage de dérivation (46) pouvant être fermé par une rondelle élastique (45), lequel passage de dérivation, à une pression d'ouverture prédéfinie, libère un écoulement de fluide entre un passage d'arrivée de fluide (43') s'étendant en direction de la première rondelle élastique (12) et la chambre de commande (2) et/ou un passage de fluide (47).

8. Agencement de robinets d'amortissement (1) selon l'une des revendications précédentes, **caractérisé en ce qu'**au moins une rondelle élastique (12, 15) présente au moins un évidement (23, 36) et **en ce que** le rapport entre la surface de l'évidement (23, 36) de la rondelle élastique (12, 15) et la surface de la rondelle élastique (12, 15) sans évidement (23, 36) est d'environ 1 à 1,5 à environ 1 à 3.

9. Agencement de robinets d'amortissement (1) selon l'une des revendications précédentes, **caractérisé en ce qu'**au moins une rondelle élastique (12, 15) présente trois évidements (23, 36) entre un anneau intérieur (25') sans évidement et un anneau extérieur (26') sans évidement.

10. Agencement de robinets d'amortissement (1) selon l'une des revendications précédentes, **caractérisé en ce que** la pression de commande dans la chambre de commande (2) peut être influencée à l'aide de la force de pression opposée à un déplacement du fluide de commande lors d'un mouvement de déplacement de l'agencement de robinets d'amortissement (1) à l'aide duquel une section transversale d'un passage d'écoulement (4) d'un robinet de travail (3) d'un dispositif d'amortissement de l'amortisseur d'oscillations (5) peut être commandée.

11. Agencement de robinets d'amortissement selon l'une des revendications précédentes, **caractérisé en ce que** l'agencement de robinets d'amortissement (1) est conçu pour fournir une pression de commande agissant sur un robinet de travail (3) dans une chambre de commande (2) d'un dispositif d'amortissement d'un amortisseur d'oscillations (5) dans la plage d'environ 1 bar à environ 20 bars.

12. Agencement de robinets d'amortissement (1) selon l'une des revendications précédentes, **caractérisé en ce que** l'agencement de robinets d'amortissement (1) est un composant d'une jambe de suspension télescopique (48) ou d'une fourche de suspension télescopique ou d'un amortisseur (52) d'un véhicule.

13. Procédé de commande d'une pression pilote dans une chambre de commande (2) d'un dispositive d'amortissement d'un amortisseur d'oscillations (5) à l'aide d'un induit (6) actionné magnétiquement d'un agencement de robinets (1) qui modifie la surface d'une ouverture de passage (41, 42) de l'agencement de robinets (1) pouvant être traversée par un fluide de commande, **caractérisé en ce que**, à l'aide de l'induit (6), une rondelle élastique (12) accouplée à l'induit (6) est déplacée par rapport à un collet (30, 32) circonférentiel et la surface de l'ouverture de passage (41, 42) entre la rondelle élastique (12) et le collet (30, 32) est ainsi modifiée et la rondelle élastique (12) guide l'induit (6) radialement et axialement par rapport à un boîtier (8) recevant l'induit (6).
